# DEMANDE DE BREVET EUROPEEN

(11) **EP 1 348 534 A1**
(43) Date de publication de la demande: **01.10.2003**
(21) Numéro de dépôt: 03290608.3
(22) Date de dépôt: 12.03.2003
(51) Int. Cl.: B29D 11/00, B29C 45/14

(54) **Procédé de fabrication d'un réflecteur optique**

(30) Priorité: 29.03.2002 FR 0204171
(71) Demandeur: VALEO VISION, 93012 Bobigny Cédex (FR)
(72) Inventeur: Ortiz, José, c/o Valeo Vision, 93012 Bobigny Cedex (FR); Meister, Laurent, c/o Valeo Vision, 93012 Bobigny Cedex (FR)
(74) Mandataire: Renous Chan, Véronique

(57) **Abrégé**

L'invention propose un procédé de fabrication d'un réflecteur optique (10) creux du type qui comporte un corps arrière (16) surmoulé autour de la face externe arrière convexe (22) d'un insert avant (12) dont la face interne avant concave (18) est recouverte d'une couche réfléchissante (20), le procédé comportant :
- une étape de réalisation de l'insert (12) par formage ;
- une étape de surmoulage du corps (16) sur l'insert (12) ; et
- une étape de dépôt de la couche réfléchissante (20) sur la face avant concave (18) de l'insert (12) ;
caractérisé en ce que l'étape de dépôt de la couche réfléchissante (20)est antérieure à l'étape de formage.

## Description

L'invention propose un procédé pour la fabrication d'un réflecteur optique.

L'invention propose plus particulièrement un procédé de fabrication d'un réflecteur optique creux du type qui comporte un corps arrière surmoulé autour de la face externe arrière convexe d'un insert avant dont la face interne avant concave est recouverte (notamment au moins partiellement) d'un revêtement réfléchissant, le procédé comportant :
- une étape de réalisation de l'insert par formage ;
- une étape de surmoulage du corps sur l'insert ; et
- une étape de dépôt de la couche réfléchissante sur la face avant concave de l'insert (ou sur au moins une partie de ladite face).

De tels réflecteurs optiques sont généralement utilisés dans l'industrie automobile pour fabriquer des feux ou des projecteurs pour équiper les véhicules automobiles.

La face réfléchissante d'un réflecteur optique est généralement concave et sa génératrice est conçue de sorte à obtenir un faisceau de lumière de conformation déterminée.

Il est connu de réaliser les réflecteurs optiques par moulage d'un matériau thermoplastique, puis de revêtir la face concave interne fonctionnelle par une couche réfléchissante qui est par exemple à base d'aluminium.

Cependant, lorsque la surface du moule est dégradée, ou bien lorsqu'elle n'est pas à une température optimale, la surface de la pièce obtenue présente des irrégularités et des aspérités qui, même après le revêtement par la couche réfléchissante, nuisent à la qualité du faisceau lumineux.

Pour remédier à ce problème, il a été proposé d'utiliser un apprêt qui colmate les différentes aspérités de la surface de la pièce moulée pour former une surface lisse et qui est ensuite revêtue par la couche réfléchissante.

Cependant, lorsque la face réfléchissante est de forme complexe, et qu'elle comporte des arêtes vives, l'apprêt a généralement tendance à adoucir ces arêtes, de sorte qu'il nuit lui aussi à la qualité du faisceau lumineux.

Le document EP-A-0.727.677 propose de réaliser la face réfléchissante sur un insert réalisé à partir d'une feuille de matériau plastique thermoformé, de surmouler le corps du réflecteur optique sur des faces de l'insert qui ne sont pas destinées à former le faisceau lumineux, puis de revêtir la surface concave fonctionnelle par la couche réfléchissante.

Le thermoformage de la feuille plastique permet d'avoir des surfaces de réflexion de très bonne qualité et qui ne sont pas altérées lors du moulage du corps. Cependant, dans le cas d'une surface de réflexion complexe, certaines zones sont parfois difficilement accessibles, de sorte que toute la surface de réflexion n'est pas entièrement recouverte de manière suffisante par la couche réfléchissante.

Pour remédier à ces inconvénients, l'invention propose un procédé du type décrit précédemment, caractérisé en ce que l'étape de dépôt de la couche réfléchissante est antérieure à l'étape de formage.

Selon d'autres caractéristiques de l'invention :
- l'étape de formage de l'insert est une étape de thermoformage d'une feuille ;
- l'étape de moulage consiste à injecter dans un moule un mélange qui est composé du matériau constitutif du corps et d'un gaz sous forme liquide et qui est susceptible de former une mousse dans le moule ;
- lors de l'étape de moulage, la face avant de l'insert est en appui sur une protubérance d'un bloc du moule qui est de forme complémentaire à celle de la face avant.

D'autres caractéristiques et avantages de l'invention apparaîtront à la lecture de la description détaillée qui suit pour la compréhension de laquelle on se reportera aux figures annexées parmi lesquelles :
- les figures 1 à 3 sont des vues schématiques en perspective qui représentent les étapes successives de l'étape de thermoformage de l'insert à partir d'une feuille thermoplastique, conforme à l'invention ;
- les figures 4 et 5 sont des sections longitudinales et transversales de l'insert et du moule représentant les étapes successives de l'étape de surmoulage du corps conforme à l'invention ;
- la figure 6 est une section longitudinale et à plus grande échelle du réflecteur optique obtenu par le procédé conforme à l'invention ; et
- la figure 7 est une vue en perspective de dessous du réflecteur optique obtenu après l'étape de surmoulage représentée aux figures 4 et 5.

Pour la description de l'invention, on adoptera à titre non limitatif les orientations verticale, longitudinale et transversale selon les repères V1, L1, T1 et V2, L2, T2 indiqués aux figures.

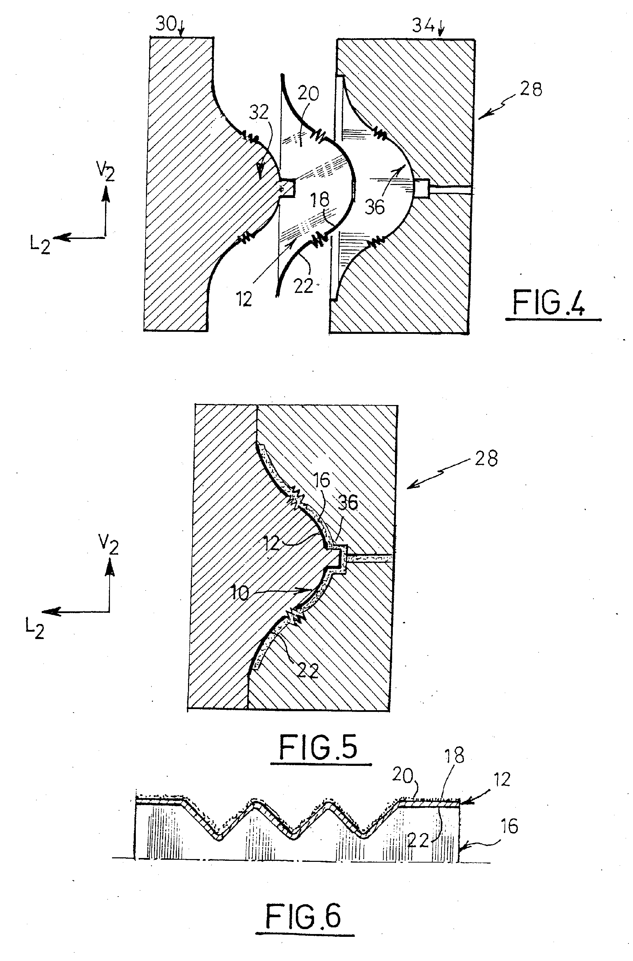

On adoptera aussi la direction d'arrière en avant comme étant la direction longitudinale et de droite à gauche en se reportant à la figure 4.

Dans la description qui va suivre, des éléments identiques, similaires ou analogues seront désignés par les mêmes chiffres de référence.

On a représenté à la figure 7 un réflecteur optique 10 qui est un élément creux réalisé en deux parties. Il comporte un insert concave 12 qui est réalisé à partir d'une feuille de matériau plastique 14 thermoformée, et qui comporte une face interne avant concave 18 qui est recouverte d'une couche réfléchissante 20 notamment à base d'aluminium, et une face externe arrière convexe 22.

Le réflecteur optique 10 comporte aussi un corps 16, qui procure au réflecteur 10 sa rigidité structurelle, et qui est surmoulé autour de la face arrière 22 de l'insert 12.

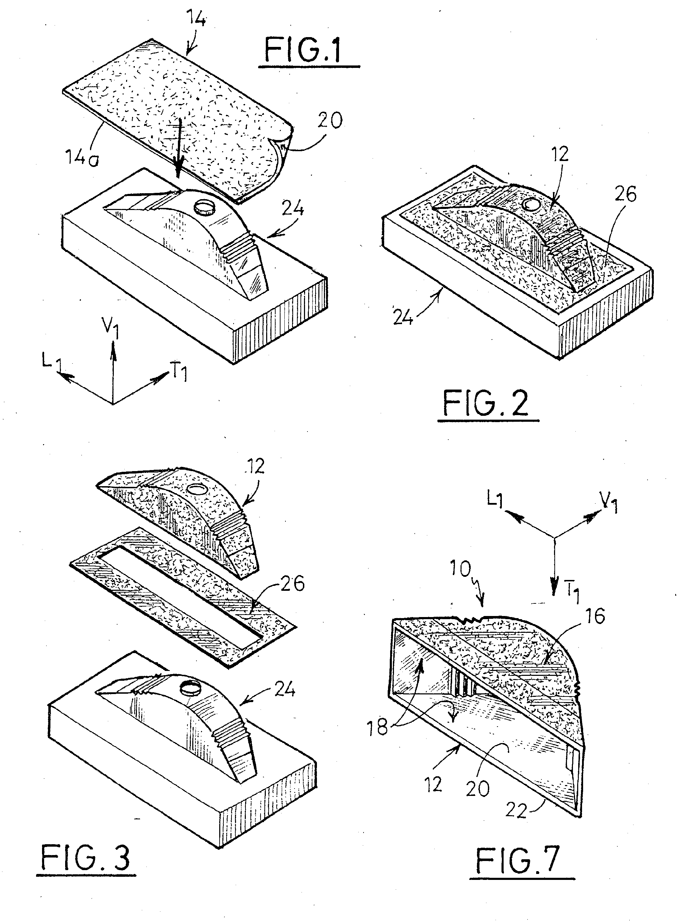

Les figures 1 à 5 représentent les étapes successives d'un procédé de réalisation du réflecteur optique 10, conforme à l'invention.

Selon une première étape du procédé non représentée, une première face avant 14a de la feuille 14 est revêtue d'une couche réfléchissante 20 à base d'aluminium ou d'autre matériau réfléchissant, par toute méthode connue, par exemple par dépôt sous vide ou par une autre méthode telle que le dépôt en "PVD" (Physical Vapor Deposition) ou en "PECVD" (Plasma Enhanced Chemical Vapor Deposition).

Une deuxième étape du procédé représentée aux figures 1 à 3 consiste à réaliser l'insert 12 par formage de la feuille 14.

Pour cela on utilise une matrice 24 dont la forme est déterminée pour que la première face 14a de la feuille 14 prenne la forme de la matrice 24 pour former les premières faces 18 de l'insert 12.

Ici, la matrice 24 est en relief, et la feuille 14 est donc positionnée avec sa première face 14a en vis-à-vis de la matrice 24 de sorte que la face avant 18 soit concave.

Inversement, et selon une variante non représentée, la matrice 24 est creuse et la feuille 14 est alors positionnée avec sa première face 14a opposée à la matrice 24.

La feuille 14 est en matériau thermoplastique, par exemple en polycarbonate. Ainsi, pour le formage de la feuille 14, celle-ci est chauffée puis appliquée sur la matrice 24. Pour que la feuille 14 épouse totalement la forme de la matrice 24, un vide est réalisé entre la feuille 14 et la matrice 24, de manière à plaquer la feuille contre la matrice 24.

En variante, sans sortir du cadre de l'invention, le thermoformage peur être obtenu par d'autres technologies bien connues de la technique.

On obtient alors l'insert 12 qui, comme représenté à la figure 3, est démoulé après refroidissement, et ses bords 26 sont découpés.

Selon une troisième étape du procédé, représentée aux figures 4 et 5, l'insert 12 est placée à l'intérieur d'un moule 28 pour le surmoulage du corps 16 autour de la face arrière 22 de l'insert 12.

Le moule 28 est formé d'un bloc fixe 30 qui comporte une protubérance 32 qui est de forme complémentaire de celle de la face avant 18 de l'insert 12, ce qui permet d'une part de positionner l'insert 12 dans le moule 28 et, d'autre part, d'empêcher que l'insert 12 ne se déforme lors du moulage.

Le moule 28 est aussi formé d'un bloc mobile 34 comportant une empreinte qui définit un volume 36, avec la face arrière 22 de l'insert 12, lorsque le moule 28 est fermé.

Le volume 36 est ensuite rempli par un produit thermoplastique pour former le corps 16 du réflecteur 10. Le produit injecté est un mélange d'un matériau thermoplastique et d'un gaz sous forme liquide. Quand le produit est à l'intérieur du volume 36, le gaz se détend, pour former une mousse. Un tel produit et sa mise en oeuvre sont par exemple décrits dans le document EP-A-1.040.158.

La formation d'une telle mousse permet de réduire la quantité de matériau utilisée.

Lorsque la mousse formant le corps 16 a refroidi, c'est-à-dire qu'il s'est rigidifié, l'ensemble est alors démoulé et forme le réflecteur 10.

Il sera aussi compris que des inversions mécaniques simples peuvent constituer des variantes de réalisation de l'invention. Par exemple, le matériau injecté dans le moule peut ne pas se présenter sous la forme d'une mousse.

De plus, le revêtement de la feuille 14 peut être réalisé avant sa découpe, c'est-à-dire lorsqu'elle est encore en bobine. Le dépôt de la couche réfléchissante 20 peut alors être effectué en continu, d'où un gain de temps important par rapport à l'art antérieur où chaque réflecteur optique était revêtu l'un après l'autre de la couche réfléchissante.

Un avantage très important de l'invention est qu'elle permet de déposer des couches réfléchissantes sur des matériaux dont l'état de surface n'est pas excellent: même avec des états de surface initiaux de qualité moyenne, on obtient après dépôt de la couche réfléchissante des réflecteurs de qualité optique tout à fait satisfaisante. On peut ainsi s'affranchir des contraintes d'aspect que l'on pouvait avoir avec les procédés de dépôt de couches standards. Par conséquent, on peut utiliser pour le matériau constitutif du corps du réflecteur des matériaux polymères avec un niveau significatif en charges. Ces charges peuvent être introduites soit pour des raisons de coût, soit en tant que charge de renforcement de la matière polymère. Avec l'invention, le taux de charge dans le polymère peut être d'au moins 10% en poids, et éventuellement jusqu'à 60 à 70% en poids du poids total du corps du réflecteur, tout en obtenant un niveau de qualité de surface optique suffisant après dépôt du revêtement réfléchissant. Pour constituer le polymère du réflecteur, on peut par exemple choisir parmi un ou plusieurs des polymères suivants : polycarbonate, polyamide, polyéthylène thermoplastique ou thermodurcissable, de préférence chargé comme mentionné plus haut. Les charges peuvent être organiques ou minérales, par exemple à base de carbone, de carbonates de calcium, et peuvent être sous forme de particules, de fibres ...

## Revendications

1. Procédé de fabrication d'un réflecteur optique (10) creux du type qui comporte un corps arrière (16) surmoulé autour de la face externe arrière convexe (22) d'un insert avant (12) dont la face interne avant concave (18) est recouverte d'une couche réfléchissante (20), le procédé comportant :
- une étape de réalisation de l'insert (12) par formage ;
- une étape de surmoulage du corps (16) sur l'insert (12) ; et
- une étape de dépôt de la couche réfléchissante (20) sur la face avant concave (18) de l'insert (12) ;
**caractérisé en ce que** l'étape de dépôt de la couche réfléchissante (20)est antérieure à l'étape de formage.

2. Procédé selon l'une quelconque des revendications précédentes, **caractérisé en ce que** l'étape de formage de l'insert (12) est une étape de thermoformage d'une feuille (14).

3. Procédé selon la revendication précédente, **caractérisé en ce que** l'étape de moulage consiste à injecter dans un moule (28) un mélange qui est composé du matériau constitutif du corps (16) et d'un gaz sous forme liquide et qui est susceptible de former une mousse dans le moule (28).

4. Procédé selon l'une quelconque des revendications précédentes, **caractérisé en ce que** lors de l'étape de moulage, la face avant (18) de l'insert (12) est en appui sur une protubérance (32) d'un bloc (30) du moule (28) qui est de forme complémentaire à celle de la face avant (18).

5. Réflecteur optique obtenu selon le procédé conforme à l'une au moins des revendications précédentes, **caractérisé en ce que** le matériau constitutif du corps dudit réflecteur est à base de polymère(s) avec un taux de charge d'au moins 10% en poids, notamment compris entre 10 et 70% en poids.

6. Dispositif d'éclairage et/ou de signalisation automobile comportant au moins un réflecteur optique selon la revendication 5.

7. véhicule automobile équipé d'au moins un dispositif selon la revendication 6.
